# EUROPEAN PATENT APPLICATION

(11) **EP 3 764 337 A1**
(43) Date of publication of application: **13.01.2021**
(21) Application number: 18908671.3
(22) Date of filing: 09.03.2018
(51) Int. Cl.: G08G 1/16

(54) **VEHICLE TRAVEL ASSIST METHOD AND VEHICLE TRAVEL ASSIST DEVICE**

(71) Applicant: NISSAN MOTOR CO., LTD., Yokohama-shi, Kanagawa 221-0023 (JP); Renault S.A.S., 92100 Boulogne-Billancourt (FR)
(72) Inventor: FANG, Fang, Atsugi-shi, Kanagawa 243--0123 (JP); YAMAGUCHI, Shoutaro, Atsugi-shi, Kanagawa 243--0123 (JP)
(74) Representative: Grünecker Patent- und Rechtsanwälte PartG mbB
(86) International application number: PCT/IB2018/000384
(87) International publication number: WO 2019/171100

(57) **Abstract**

A vehicle travel assist method includes detecting a surrounding object (B) different from another vehicle A and traveling on a road toward a target intersection K. The method also includes assisting the travel of the host vehicle S based on the predicted course of the surrounding object (B) instead of the predicted course of the other vehicle A in a case where the other vehicle A is following the surrounding object (B).

## Description

### TECHNICAL FIELD

The present invention relates to vehicle travel assist methods and vehicle travel assist devices.

### BACKGROUND ART

A technique has been disclosed that includes setting risk based on pedestrians and the like crossing a road as a risk distribution in which the risk is distributed across the width of the road and outputting an alarm for prompting a driver to stop in the case where a risk value in the risk distribution reaches a threshold (see Patent Literature 1).

### CITATION LIST

### PATENT LITERATURE

Patent Literature 1: Japanese Patent Application Publication No. 2010-79425

### SUMMARY OF INVENTION

### TECHNICAL PROBLEM

Although the above technique prompts a driver to stop the vehicle based on the risk concerning pedestrians and the like, the technique does not consider situations in which other vehicles and surrounding objects (for example, two-wheelers) different from other vehicles are traveling on the road. In the case where another vehicle and a surrounding object are traveling on the same road, if the courses of the surrounding object and the other vehicle can be predicted at earlier timings, it is possible to assist the travel of the host vehicle based on the predicted courses.

The present invention has been made in light of the above problem, and an object thereof is to provide a vehicle travel assist method and vehicle travel control device capable of predicting the courses of a surrounding object and another vehicle at earlier timings and assisting the travel of the host vehicle based on the predicted courses.

### SOLUTION TO PROBLEM

A vehicle travel assist method according to an aspect of the present invention includes detecting a surrounding object different from another vehicle and traveling on a road toward an intersection. The method also includes assisting the travel of the host vehicle based on the predicted course of the surrounding object instead of the predicted course of the other vehicle in a case where the other vehicle is following the surrounding object.

### ADVANTAGEOUS EFFECTS OF INVENTION

The present invention makes it possible to predict the courses of a surrounding object and another vehicle at earlier timings and assisting the travel of the host vehicle based on the predicted courses.

### BRIEF DESCRIPTION OF DRAWINGS

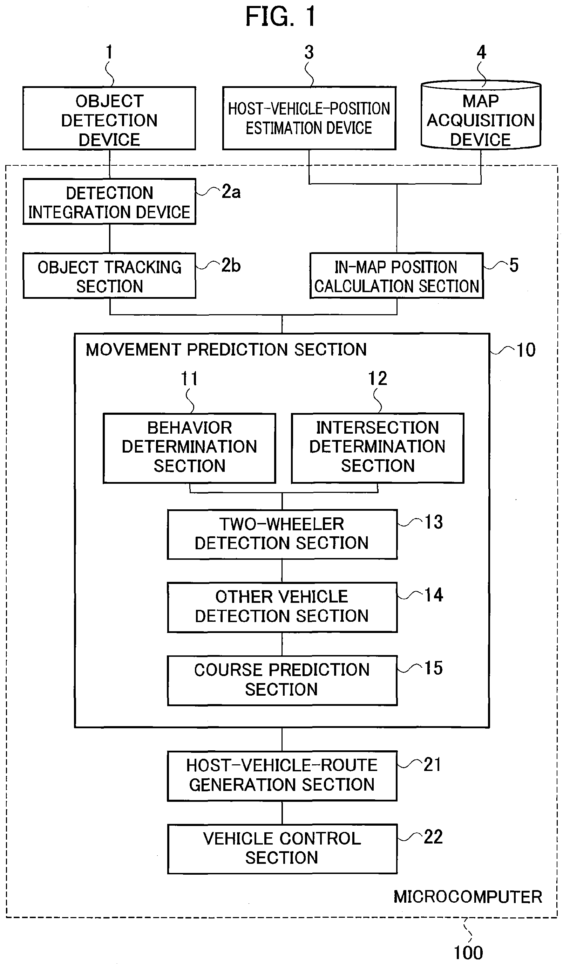

[Fig. 1] Fig. 1 is a block diagram illustrating the configuration of a vehicle travel assist device according to an embodiment.

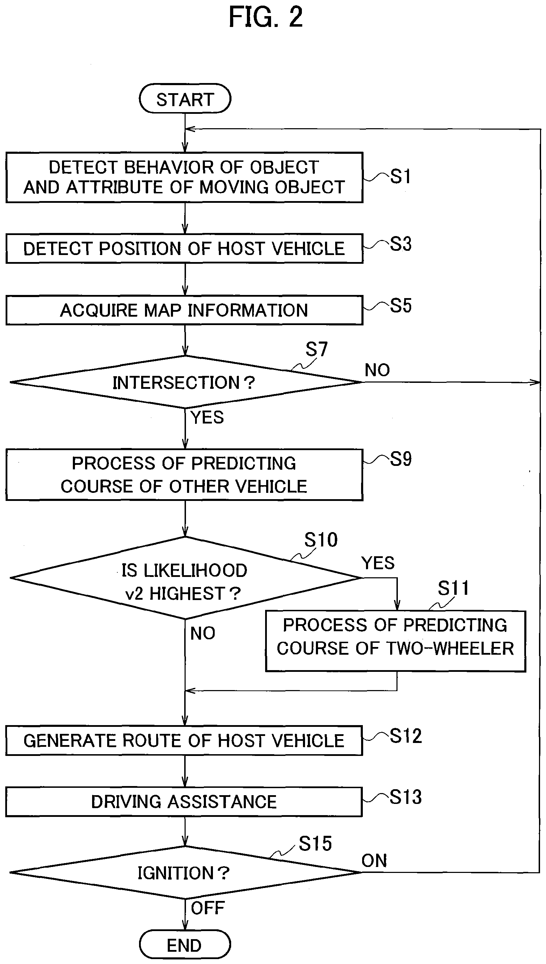

[Fig. 2] Fig. 2 is a flowchart illustrating a main process routine performed by a microcomputer 100.

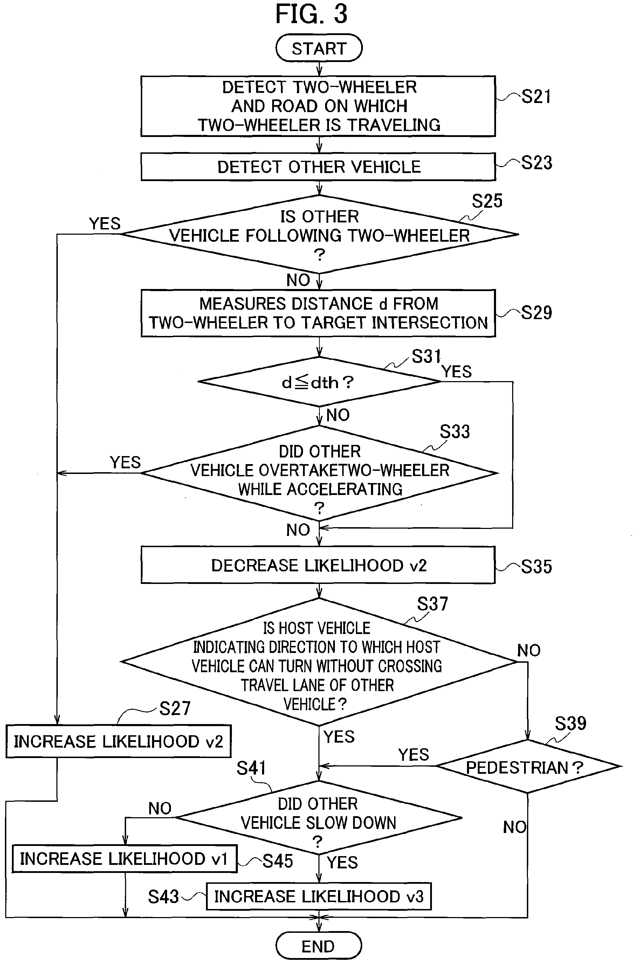

[Fig. 3] Fig. 3 is a flowchart illustrating detailed procedures of a process of predicting the course of another vehicle (S9).

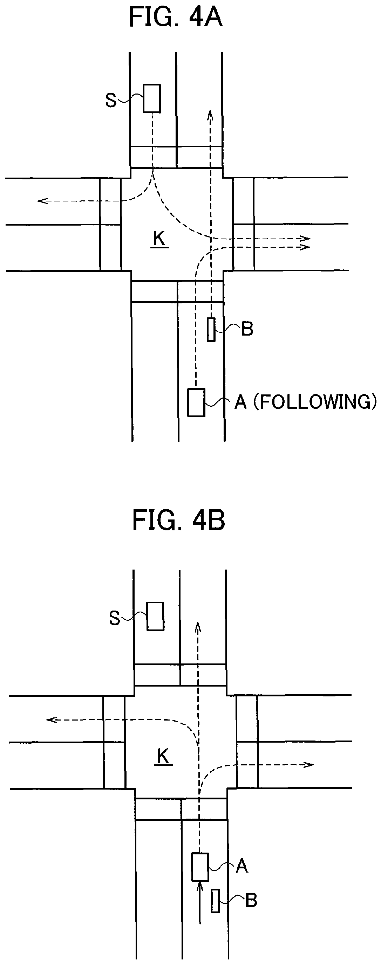

[Fig. 4A] Fig. 4A is a diagram illustrating the courses of another vehicle A and a two-wheeler B and the travel route of a host vehicle S for the case where the other vehicle A is following the two-wheeler B.
[Fig. 4B] Fig. 4B is a diagram illustrating the course of another vehicle A for the case where the other vehicle A is not following a two-wheeler B.

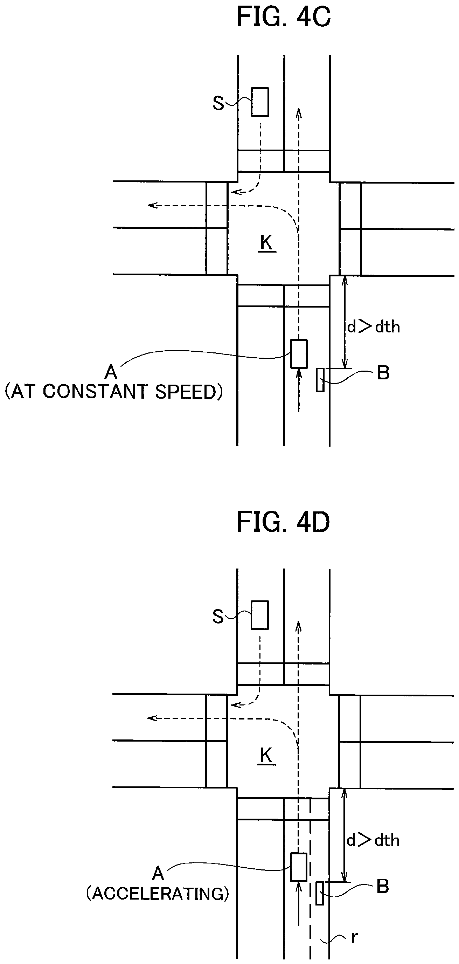

[Fig. 4C] Fig. 4C is a diagram illustrating the course of another vehicle A and the travel route of a host vehicle S for the case where distance d from a two-wheeler B to a target intersection K is larger than threshold dth and where the other vehicle A overtook the two-wheeler B without accelerating.
[Fig. 4D] Fig. 4D is a diagram illustrating the course of another vehicle A and the travel route of a host vehicle S for the case where distance d from a two-wheeler B to a target intersection K is larger than threshold dth, where the other vehicle A overtook the two-wheeler B while accelerating, and where the road on which the two-wheeler B and the other vehicle A are traveling has a dedicated two-wheeler lane r.

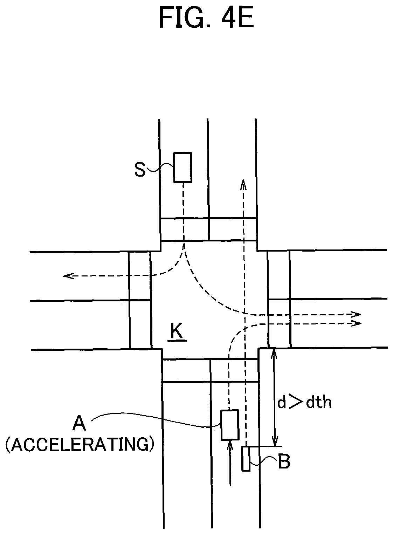

[Fig. 4E] Fig. 4E is a diagram illustrating the courses of another vehicle A and a two-wheeler B and the travel route of a host vehicle S for the case where distance d from the two-wheeler B to a target intersection K is larger than threshold dth, where the other vehicle A overtook the two-wheeler B while accelerating, and where the road on which the two-wheeler B and the other vehicle A are traveling does not have a dedicated two-wheeler lane.

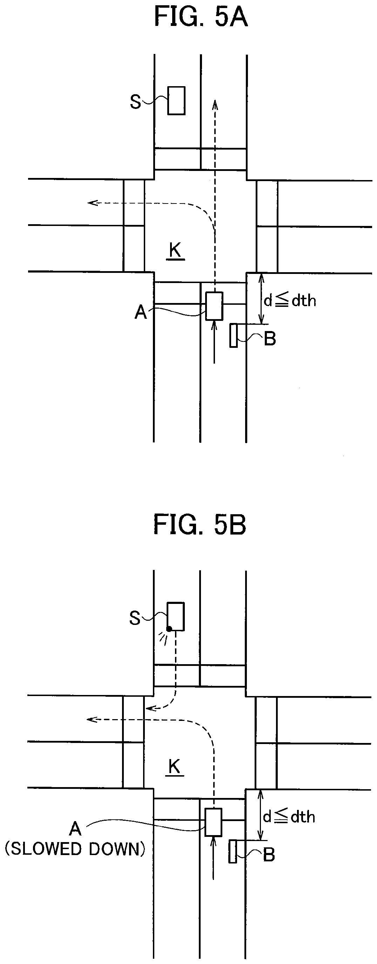

[Fig. 5A] Fig. 5A is a diagram illustrating the course of another vehicle A for the case where distance d from a two-wheeler B to a target intersection K is smaller than or equal to threshold dth.
[Fig. 5B] Fig. 5B is a diagram illustrating the course of another vehicle A and the travel route of a host vehicle S for the case where distance d from a two-wheeler B to a target intersection K is smaller than or equal to threshold dth, where the host vehicle S is performing direction indication for turning right, and where the other vehicle A slowed down.

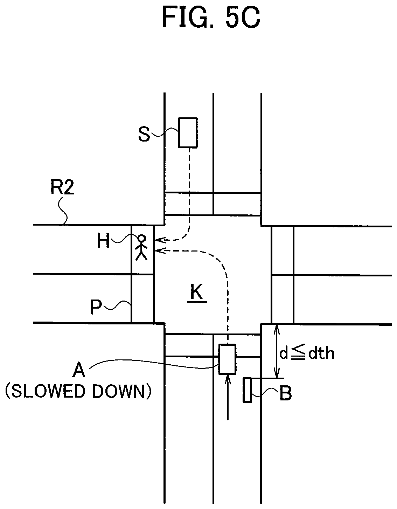

[Fig. 5C] Fig. 5C is a diagram illustrating the course of another vehicle A and the travel route of a host vehicle S for the case where distance d from a two-wheeler B to a target intersection K is smaller than or equal to threshold dth, where there is a pedestrian H at a crosswalk P or the like crossing a road R2 on which the other vehicle A will travel if the other vehicle A turns left, and where the other vehicle A slowed down.

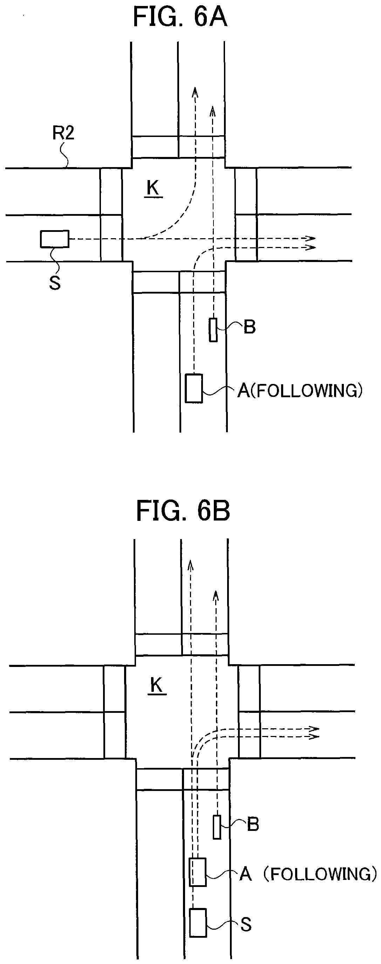

[Fig. 6A] Fig. 6A is a diagram illustrating the courses of another vehicle A and a two-wheeler B and the travel route of a host vehicle S for the case where a target intersection K does not have a traffic light, where the host vehicle S is traveling toward the target intersection K on the road R2 on which the other vehicle A will travel if the other vehicle A turns left, and where the other vehicle A is following the two-wheeler B.
[Fig. 6B] Fig. 6B is a diagram illustrating the courses of another vehicle A and a two-wheeler B and the travel route of a host vehicle S for the case where the host vehicle S is traveling behind the other vehicle A toward a target intersection K and where the other vehicle A is following the two-wheeler B.

### DESCRIPTION OF EMBODIMENTS

Next, with reference to the drawings, an embodiment of the present invention will be described in detail. In the description, the same constituents will be denoted by the same signs, and repetitive description thereof will be omitted.

The configuration of a vehicle travel assist device according the embodiment will be described with reference to Fig. 1. The vehicle travel assist device includes an object detection device 1, a host-vehicle-position estimation device 3, a map acquisition device 4, and a microcomputer 100. A vehicle on which this vehicle travel assist device is mounted is referred to as a host vehicle.

The object detection device 1 includes multiple object detection sensors of different kinds mounted on the host vehicle for detecting objects around the host vehicle, such as laser radars, millimeter wave radars, and cameras. The object detection device 1 detects objects around the host vehicle with multiple object detection sensors. The object detection device 1 detects moving objects including other vehicles, motorbikes, bicycles, and pedestrians and stationary objects including parked vehicles. The object detection device 1 detects, for example, the positions, orientations, sizes, speeds, accelerations, decelerations, and yaw rates of moving objects and stationary objects relative to the host vehicle. Note that the position, orientation (yaw angle), size, speed, acceleration, deceleration, and yaw rate of an object are collectively referred to as the "behavior" of the object. The object detection device 1 outputs, as detection result, for example, the behavior of the object in two dimensions in a zenithal chart which is a view from midair above the host vehicle.

The host-vehicle-position estimation device 3 includes a position detection sensor mounted on the host vehicle for measuring the absolute position of the host vehicle, such as a global positioning system (GPS) or an odometry. The host-vehicle-position estimation device 3 measures, using the position detection sensor, the absolute position of the host vehicle, specifically, the position, orientation, and speed of the host vehicle relative to a specified reference point.

The map acquisition device 4 acquires map information indicating the structure of the road that the host vehicle travels. The map acquisition device 4 may have a map database storing the map information or may acquire the map information from an external map data server by cloud computing. The map information that the map acquisition device 4 acquires includes road structure information such as the absolute positions of traffic lanes and the lane connection relationship and relative position relationship between traffic lanes. Specifically, the map information includes the positions of intersections, the positions, directions, and widths of the roads connecting to intersections, the traffic lane configuration of each road, and the position and width of each traffic lane. The map information also includes information indicating whether vehicles can turn right or left or go straight, for each traffic lane entering an intersection. In other words, the map information includes traffic rules at intersections.

The microcomputer 100 is a control circuit that predicts the courses of other vehicles based on the detection result by the object detection device 1 and the host-vehicle-position estimation device 3 and the information acquired by the map acquisition device 4 and assists the travel of the host vehicle based on the predicted courses. It can be said that other vehicles are risk judgement targets for the host vehicle. Here, to assist the travel of the host vehicle, the vehicle travel assist device generates the route of the host vehicle and control the host vehicle according to the generated route. Further, in some cases, the vehicle travel assist device predicts the courses of surrounding objects different from other vehicles and assists the travel of the host vehicle based on the predicted courses of the surrounding objects. It can be said that surrounding objects are also risk judgement targets for the host vehicle. Here, as in the case of other vehicles, the vehicle travel assist device generates the route of the host vehicle and controls the host vehicle according to the generated route. Examples of surrounding objects include two-wheelers, three-wheelers, and rickshaws. The embodiment is described based on the assumption that a surrounding object is a two-wheeler (as an example of a surrounding object).

The microcomputer 100 is a general-purpose microcomputer including a central processing unit (CPU), memory, and an input-output unit. The microcomputer 100 has a computer program (vehicle travel assist program) installed for making microcomputer 100 function as the vehicle travel assist device. The microcomputer 100, by executing the computer program, functions as multiple information processing circuits (2a, 2b, 5, 10, 21, 22) included in the vehicle travel assist device. Note that although in the example shown here, the multiple information processing circuits (2a, 2b, 5, 10, 21, 22) included in the vehicle travel assist device are implemented using software, the information processing circuits (2a, 2b, 5, 10, 21, 22) may be, as a matter of course, configured by using dedicated hardware for executing the information processes described below. The multiple information processing circuits (2a, 2b, 5, 10, 21, 22) may be configured using separate pieces of hardware. Further, an electronic control unit (ECU) used for other control related to the vehicle may also server as the information processing circuits (2a, 2b, 5, 10, 21, 22).

The microcomputer 100 includes a detection integration section 2a, object tracking section 2b, in-map position calculation section 5, movement prediction section 10, host-vehicle-route generation section 21, and vehicle control section 22, as multiple information processing circuits (2a, 2b, 5, 10, 21, 22). The movement prediction section 10 includes an intersection determination section 12, two-wheeler detection section 13, other vehicle detection section 14, and course prediction section 15.

The detection integration section 2a integrates multiple pieces of detection result obtained from multiple object detection sensors included in the object detection device 1 to output one piece of detection result for each object. Specifically, the detection integration section 2a calculates the most reasonable behavior of each object having the smallest error, from the behavior of the object obtained from each of the object detection sensors, considering the error characteristics or the like of each object detection sensor. Specifically, using a known sensor fusion technique, the detection integration section 2a comprehensively evaluates detection result acquired by multiple kinds of sensors to obtain more accurate detection result.

The object tracking section 2b tracks objects detected by the object detection device 1. Specifically, from the detection result integrated by the detection integration section 2a, the object tracking section 2b verifies the behavior of an object outputted at different times to determine whether the objects detected at the different times are the same (establishes associations) and predicts the behavior of the object based on the association results. Note that the behavior of an object outputted at different times is stored in the memory inside the microcomputer 100 and is used for path prediction described later.

The in-map position calculation section 5 estimates, from the absolute position of the host vehicle obtained by the host-vehicle-position estimation device 3 and the map data acquired by the map acquisition device 4, the position and orientation of the host vehicle on the map. For example, the in-map position calculation section 5 identifies the road that the host vehicle is traveling and, further in the road, the traffic lane in which the host vehicle is traveling.

The movement prediction section 10 predicts the movements of moving objects around the host vehicle based on the detection result obtained by the detection integration section 2a and the object tracking section 2b, the position of the host vehicle (hereinafter referred to as the host vehicle position) identified by the in-map position calculation section 5, and the map information obtained by the map acquisition device 4. Hereinafter, a specific configuration of the movement prediction section 10 will be described.

The behavior determination section 11 identifies the behavior of objects on the map based on the detection result by the detection integration section 2a and the object tracking section 2b, the host vehicle position, and the map information. Further, in the case where the position of an object on the map changes over time, the behavior determination section 11 determines that the object is a "moving object" and determines the attributes of the moving object (another vehicle, a pedestrian) from the size and speed of the moving object. In the case where it is determined that the moving object is "another vehicle" in traveling, the behavior determination section 11 determines the road and traffic lane on which this vehicle is traveling.

Note that in the case where the position of an object on the map does not change over time, the behavior determination section 11 determines that the object is a "stationary object" and determines the attributes of the stationary object (a parked vehicle, a pedestrian, or others) from the position on the map, orientation, and size of the stationary object. The determination result obtained by the behavior determination section 11 is referred to as the behavior determination result.

Based on the host vehicle position and the positions of intersections registered in the map information, the intersection determination section 12 determines whether the host vehicle is traveling in the section having a specified or smaller length from the intersection toward which the host vehicle is heading next (hereinafter referred to as the target intersection).

Based on the detection result by the detection integration section 2a, the object tracking section 2b, and the behavior determination section 11, the two-wheeler detection section 13 detects a two-wheeler traveling toward the target intersection (hereinafter simply referred to as two-wheelers) and the road on which the two-wheeler is traveling. Examples of the two-wheeler include bicycles, motor-assisted bicycles, ordinary motorcycles, and heavy motorcycles.

Based on the detection result by the detection integration section 2a, the object tracking section 2b, and the behavior determination section 11, the other vehicle detection section 14 detects another vehicle traveling toward the target intersection on the road on which the two-wheeler is traveling (hereinafter simply referred to as another vehicle).

Based on the map information and the detection result by the detection integration section 2a, the object tracking section 2b, and the behavior determination section 11, the course prediction section 15 predicts the course of the other vehicle at the target intersection. Specifically, the course prediction section 15 predicts whether (1) the other vehicle goes straight, or (2) the other vehicle turns to the direction toward the two-wheeler side from the center in the width direction of the road on which the two-wheeler and the other vehicle are traveling (hereinafter referred to as the "two-wheeler direction") (if there is an opposite lane, whether the other vehicle turns without crossing the opposite lane), or (3) the other vehicle turns to the direction opposite to the two-wheeler direction (if there is an opposite lane, whether the other vehicle crosses the opposite lane when it turns). Specifically, the course prediction section 15 calculates a likelihood for each course indicating the possibility that the other vehicle travels in this course and predicts that the vehicle will travel in the course corresponding to the highest likelihood.

Hereinafter, (1) the likelihood corresponding to the course of going straight is referred to as likelihood v1, (2) the likelihood corresponding to the course in the two-wheeler direction (the course of turning to the two-wheeler direction) is referred to as likelihood v2, and (3) the likelihood corresponding to the course in the direction opposite to the two-wheeler direction (the course of turning to the direction opposite to the two-wheeler direction) is referred to as likelihood v3. Here, it is assumed that each likelihood is initialized to the same value before the course of the other vehicle is predicted (step S9 described later).

In some cases, the course prediction section 15 predicts the course of the two-wheeler based on the map information and the detection result by the detection integration section 2a, the object tracking section 2b, and the behavior determination section 11.

The host-vehicle-route generation section 21 generates the route of the host vehicle based on the course of the other vehicle or the two-wheeler predicted by the movement prediction section 10. The host-vehicle-route generation section 21 also generates a plan for traveling and stopping on the route. Hereinafter, this is referred to as the route, including the plan for traveling and stopping.

In order that the host vehicle can travel according to the route generated by the host-vehicle-route generation section 21, the vehicle control section 22 selects necessary actuators out of a steering actuator, an accelerator pedal actuator, and a brake pedal actuator based on the host vehicle position and drives them.

Fig. 2 is a flowchart illustrating a main process routine performed by the microcomputer 100.

When the ignition of the host vehicle is turned on, first the behavior determination section 11 identifies the behavior of objects on the map and detects the attributes of moving objects (S1).

Then, the in-map position calculation section 5 detects the position of the host vehicle on the map (the host vehicle position) (S3).

Next, the intersection determination section 12 acquires the map information (S5) and determines, based on the map information and the host vehicle position detected at step S3, whether the host vehicle is traveling in the section having a length smaller than or equal to a specified length from the intersection toward which the host vehicle is heading next (the target intersection) (S7). If the host vehicle is not traveling in the section, the process returns to step S1, and If the host vehicle is traveling in the section, the process (S9) of predicting the course of the other vehicle is executed.

When the process of predicting the course of the other vehicle is finished, the course prediction section 15 determines whether the highest likelihood is likelihood v2 (S10). If the highest likelihood is likelihood v2 (YES at S10), the course prediction section 15 performs the process of predicting the course of the two-wheeler (S11). In the process of predicting the course of the two-wheeler (S11), the course prediction section 15 predicts the course of the two-wheeler detected in the process of predicting the course of the other vehicle (S9). Specifically, the course prediction section 15 detects the behavior of the two-wheeler (for example, the acceleration or deceleration of the two-wheeler) and the travel position in the vehicle-width direction in the traffic lane at which the two-wheeler is traveling, and the course prediction section 15 predicts the course of the two-wheeler based on the detected behavior and travel position. In other words, in the case where the highest likelihood is likelihood v2 (YES at S10), the two-wheeler is a risk judgement target for the host vehicle.

If the highest likelihood is not likelihood v2 but likelihood v1 or likelihood v3 (NO at S10), the host-vehicle-route generation section 21 generates the route of the host vehicle based on the predicted course of the other vehicle (S12). On the other hand, in the case where the process of predicting the course of the two-wheeler (S11) is executed, the host-vehicle-route generation section 21 generates the route of the host vehicle based on the course of the two-wheeler (S12).

Here, for example, the host-vehicle-route generation section 21 determines a course of the host vehicle that does not obstructs the travel of the two-wheeler. Alternatively, the host-vehicle-route generation section 21 assumes that the other vehicle will travel in the course corresponding to the highest likelihood and determines the course of the host vehicle based on the course of the other vehicle such that the host vehicle will travel appropriately based on the assumption. For example, the host-vehicle-route generation section 21 generate a route that conforms to the traffic rules for the target intersection. Note that the route of the host vehicle may be generated based on both predicted causes of the other vehicle and the two-wheeler. In other words, the route of the host vehicle may be generated at least based on the course of the two-wheeler.

Next, the vehicle control section 22 assists the travel of the host vehicle (S13) by controlling the host vehicle such that the host vehicle will travel following the route. During the travel, the host vehicle slows down or stops as necessary.

Next, it is determined whether the ignition of the host vehicle is off (S15). If it is on, the process returns to step S1, and if it is off, the main process routine ends.

Fig. 3 is a flowchart illustrating detailed procedures of the process of predicting the course of the other vehicle (S9).

First, based on the map information and the detection result by the detection integration section 2a, the object tracking section 2b, and the behavior determination section 11, the two-wheeler detection section 13 detects a two-wheeler traveling toward the target intersection and the road on which the two-wheeler is traveling (S21). Note that since the two-wheeler detection section 13 detects a two-wheeler based on the detection result of the object detection device 1 (sensors), it can be said that the object detection device 1 (sensors) detects a two-wheeler.

Next based on the map information, the detection result by the detection integration section 2a, the object tracking section 2b, and the behavior determination section 11, and the position of the road detected at step S21, the other vehicle detection section 14 detects a vehicle (another vehicle) different from the two-wheeler and traveling toward the target intersection on the road on which the two-wheeler is traveling (S23). Note that since the other vehicle detection section 14 detects another vehicle based on the detection result of the object detection device 1 (sensors), it can be said that the object detection device 1(sensors) detects another vehicle.

In the subsequent processes, determinations concerning traffic lanes, the two-wheeler, the other vehicle, and pedestrians are executed based on the host vehicle position, the map information, and the detection result by the detection integration section 2a, the object tracking section 2b, and the behavior determination section 11.

First, the course prediction section 15 determines whether the other vehicle is following the two-wheeler (S25). Specifically, the course prediction section 15 determines whether the other vehicle is traveling behind or obliquely behind the two-wheeler (S25). In the case where the other vehicle overtakes the two-wheeler, the other vehicle is not traveling behind or obliquely behind the two-wheeler. In this case, it is determined that the other vehicle is not following the two-wheeler (NO at S25).

For example, in the case where the speeds of the two-wheeler and the other vehicle are approximately the same, and where the distance between the two-wheeler and the other vehicle is approximately constant, it is determined that the other vehicle is following the two-wheeler. In the case where the speed of the other vehicle is higher than the speed of the two-wheeler, it is preferable that the determination be made at a later timing. Then, if the distance between the two-wheeler and the other vehicle becomes approximately constant, it can be determined that the other vehicle is following the two-wheeler.

In the case where the other vehicle is following the two-wheeler (YES at S25), the course prediction section 15 increases likelihood v2 (S27), and the process ends. Specifically, the vehicle travel assist device predicts at step S27 that the other vehicle will turn at the target intersection to the two-wheeler direction. In the case of right-hand traffic for vehicles, the vehicle travel assist device predicts that the other vehicle will turn right at the target intersection (S27).

If the other vehicle is not following the two-wheeler (NO at S25), specifically, if the other vehicle has overtaken the two-wheeler, the course prediction section 15 measures the distance from the two-wheeler to the target intersection (hereinafter referred to as distance d) (S29).

Next, the course prediction section 15 determines whether distance d is smaller than or equal to a specified threshold dth (which is, for example, set in advance to approximately 30 m to 50 m) (S31).

If distance d is larger than threshold dth (NO at S31), the course prediction section 15 determines whether the other vehicle accelerated when it overtook the two-wheeler (S33). If the other vehicle accelerated when it overtook the two-wheeler (YES at S33), the process proceeds to step S27.

If distance d is smaller than or equal to threshold dth (YES at S31), or if the other vehicle did not accelerate when it overtook the two-wheeler (NO at S33), the course prediction section 15 decreases likelihood v2 (S35), and the process proceeds to step S37. At step S35, the course prediction section 15 predicts that the other vehicle is likely to go straight at the target intersection or turn to the direction opposite to the two-wheeler direction.

For example, if the other vehicle overtook the two-wheeler at a constant speed (NO at S33), the course prediction section 15 decreases likelihood v2 (S35). Note that determination of whether the speed is constant does not have to be stringent, but a speed can be determined to be constant if the speed is within the range of a specified error.

Note that if the other vehicle accelerated when it overtook the two-wheeler (YES at S33), the course prediction section 15 may determine whether the traffic lane on which the two-wheeler and the other vehicle are traveling has a dedicated two-wheeler lane. In this case, if the lane does not have a dedicated two-wheeler lane, the process may proceed to step S27, and if it has, the process may proceed to step S35.

At step S37 and the subsequent steps, it is assumed that the host vehicle is traveling toward the target intersection in the traffic lane (hereinafter referred to as the opposite lane) opposed to the traffic lane (hereinafter referred to as the travel lane) in which the other vehicle is traveling.

At step S37, the course prediction section 15 acquires the state of the direction indicator of the host vehicle, and based on the acquired state, the course prediction section 15 determines whether the host vehicle is indicating the direction to which the host vehicle can turn without crossing the travel lane of the other vehicle (S37).

If the host vehicle is indicating the direction to which the other vehicle can turn by crossing the travel lane (NO at S37) or if the host vehicle is not performing direction indication (NO at S37), the course prediction section 15 determines whether there is a pedestrian at a crosswalk or the like crossing the traffic lane on which the other vehicle will travel after the other vehicle turns at the target intersection, crossing the opposite lane (S39). If there is no pedestrian (NO at S39), the process ends.

If the host vehicle is indicating the direction to which the host vehicle can turn without crossing the travel lane (YES at S37) or if there is a pedestrian (YES at S39), the course prediction section 15 determines whether the other vehicle has slowed down (S41).

If the other vehicle has slowed down (YES at S41), the course prediction section 15 increases likelihood v3 (S43), and the process ends. Specifically, at step S43, the course prediction section 15 predicts that the other vehicle will turn at the target intersection to the direction opposite to the two-wheeler direction. In the case of right-hand traffic for vehicles, the course prediction section 15 predicts that the other vehicle will turn left at the target intersection (S43).

On the other hand, if the other vehicle did not slow down (NO at S41), the course prediction section 15 increases likelihood v1 (S45), and the process ends. Specifically, at step S45, the course prediction section 15 predicts that the other vehicle will go straight at the target intersection.

Operational advantages of the embodiment will be described with reference to figures specifically illustrating an intersection and vehicles.

In Fig. 4A and the subsequent figures, vehicles drive on the right-hand side of the road, and K represents the target intersection, S the host vehicle, A the other vehicle, and B the two-wheeler.

As illustrated in Fig. 4A, a two-wheeler B is traveling on the road shoulder side (on the right side) in the travel lane extending toward a target intersection K, on the road with one lane on both sides. The two-wheeler B travels on the road shoulder in some cases. In other words, the two-wheeler B is traveling on the road shoulder side of the center of this travel lane. Even in the case where this road is one-way traffic, the two-wheeler B travels on the road shoulder side in most cases. In other words, the two-wheeler travels on the road shoulder side (on the right side) of the road center. Also, in Fig. 4B and the subsequent figures, the two-wheeler B travels on the right side.

In the case where another vehicle A is following the two-wheeler B described above, the vehicle travel assist device predicts that the other, vehicle A will turn right at the target intersection K. Specifically, the vehicle travel assist device predicts that the two-wheeler B will go straight (or turn right) at the target intersection K, and that then, the other vehicle A will turn right at the target intersection K.

Here, description will be made of the operation of the vehicle in the case where this prediction is not performed. For example, in the case where a host vehicle S is going to turn right and where the other vehicle A has not performed direction indication, the host vehicle S has to stop once before the target intersection K because the other vehicle A may turn left.

In the embodiment, the vehicle travel assist device predicts that the other vehicle A will turn right in the case where the other vehicle A is following the two-wheeler B.

Since the other vehicle A is going to turn right, it is preferable to assist the travel of the host vehicle after the other vehicle A turns right based on the course of the two-wheeler B. In the embodiment, at the time when the vehicle travel assist device predicts that the other vehicle A will turn right because the other vehicle A is following the two-wheeler B, in short, at an early timing, the vehicle travel assist device predicts the course of the two-wheeler B. Then, based on the predicted course of the two-wheeler B, the vehicle travel assist device assists the travel of the host vehicle S.

For example, in the case where the vehicle travel assist device predicts that the two-wheeler B will go straight and where the host vehicle S is going to turn left, a safety measure can be taken, such as paying attention to the two-wheeler B as an target when the host vehicle passes in front of the two-wheeler B and turns left at the target intersection K.

In addition, since the vehicle travel assist device predicts that the other vehicle A will turn right, it is possible, for example, to predict that the other vehicle A will turn right, at an earlier timing than when the other vehicle A performs direction indication. Thus, the host vehicle S which is going to turn right does not have to slow down or stop once before the target intersection K and can travel smoothly.

Unlike the case in Fig. 4A, in the case where the other vehicle A is not following the two-wheeler B as illustrated in Fig. 4B, specifically, in the case where the other vehicle A has overtaken the two-wheeler B, there are a possibility that the other vehicle A goes straight, also a possibility that it turns right, and a possibility that it turns left.

As illustrated in Fig. 4C, in the case where distance d from the two-wheeler B to the target intersection K is larger than threshold dth and where the other vehicle A overtook the two-wheeler B at a constant speed, the vehicle travel assist device predicts that the other vehicle A will go straight or turn left. Specifically, it is possible to predict that the other vehicle A will not turn right, at an earlier timing than when the other vehicle A performs direction indication.

With this prediction, in the case where the host vehicle S is going to turn right and where the other vehicle A is likely to turn left earlier than the host vehicle S, the host vehicle S can take a safety measure such as slowing down at an earlier timing, stopping once before the target intersection K, or turning right at the target intersection K after the other vehicle A turns left.

As illustrated in Fig. 4D, even in the case where distance d from the two-wheeler B to the target intersection K is larger than threshold dth and where the other vehicle A overtook the two-wheeler B while accelerating, if the road on which the two-wheeler B and the other vehicle A are traveling has a dedicated two-wheeler lane r, the vehicle travel assist device predicts that the other vehicle A will go straight or turn left. Specifically, the vehicle travel assist device predicts that the other vehicle A will not turn right. It is because if the other vehicle A turned right, the other vehicle A would cross the dedicated two-wheeler lane r and block the path in front of the two-wheeler B. Thus, it is possible to predict that the other vehicle A will not turn right, at an earlier timing than when the other vehicle A performs direction indication. This prediction allows the host vehicle S to take a safety measure as in the case of Fig. 4C.

On the other hand, as illustrated in Fig. 4E, in the case where distance d from the two-wheeler B to the target intersection K is larger than threshold dth, where the other vehicle A overtook the two-wheeler B while accelerating, and where the road on which the two-wheeler B and the other vehicle A are traveling does not have a dedicated two-wheeler lane, the vehicle travel assist device predicts that the other vehicle A will turn right. It is because, for example, the other vehicle A is thought to want to turn right at the target intersection K before the traffic light at the target intersection K changes. The same is true of the case where whether the road has a dedicated two-wheeler lane is not taken into account. Thus, it is possible to predict that the other vehicle A will turn right, at an earlier timing than when the other vehicle A performs direction indication.

Since the other vehicle A turns right, it is preferable, as in Fig. 4A, to assist the travel of the host vehicle based on the course of the two-wheeler B, after the other vehicle A turns right. Accordingly, in the embodiment, at the time when the vehicle travel assist device predicts that the other vehicle A will turn right because distance d is larger than threshold dth, the other vehicle A overtook the two-wheeler B while accelerating, and the road does not have a dedicated two-wheeler lane, in short, at an early timing, the vehicle travel assist device predicts the course of the two-wheeler B. Then, based on the predicted course of the two-wheeler B, the vehicle travel assist device assists the travel of the host vehicle S.

For example, in the case where the vehicle travel assist device predicts that the two-wheeler B will go straight and where the host vehicle S is going to turn left, a safety measure can be taken, such as paying attention to the two-wheeler B as an target when the host vehicle turns left at the target intersection K.

In addition, since the vehicle travel assist device predicts that the other vehicle A will turn right, the host vehicle S which is going to turn right does not have to stop once before the target intersection K and can travel smoothly. In the case where the host vehicle S is going to go straight, it can pass through the target intersection K without slowing down.

In the case where distance d from the two-wheeler B to the target intersection K is smaller than or equal to threshold dth as illustrated in Fig. 5A, there are substantially a possibility of the other vehicle A going straight and a possibility of its turning left because the possibility of the other vehicle A turning right is extremely low.

As illustrated in Fig. 5B, in the case where the host vehicle S performs direction indication for turning right and where the other vehicle A slows down, the vehicle travel assist device predicts that the other vehicle A will turn left. It is because the other vehicle A is thought to have slowed down , for example, because turning right is prioritized to turning left at intersections, and the host vehicle S is performing direction indication for turning right.

As illustrated in Fig. 5C, in the case where there is a pedestrian H at a crosswalk P or the like crossing the road R2 on which the other vehicle will travel if it turns left and where the other vehicle A has slowed down, the vehicle travel assist device predicts that the other vehicle A will turn left.

The prediction of the course of the other vehicle as above can be executed in the case where the host vehicle S is not an oncoming vehicle to the other vehicle.

In Fig. 6A, it is assumed that the target intersection K does not have a traffic light. The host vehicle S is traveling toward the target intersection K on the road R2 on which the other vehicle A will travel after it turns left if the other vehicle A turns left. The course prediction section 15 of the host vehicle S predicts that the other vehicle A will turns right at the target intersection K because the other vehicle A is following the two-wheeler B.

Since the other vehicle A turns right, it is preferable to assist the travel of the host vehicle based on the course of the two-wheeler B after the other vehicle A turns right as in the case of Fig. 4A. Accordingly, in the embodiment, at the time when the vehicle travel assist device predicts that the other vehicle A will turn right since the other vehicle A is following the two-wheeler B, in short, at an early timing, the vehicle travel assist device predicts the course of the two-wheeler B. Then, based on the predicted course of the two-wheeler B, the vehicle travel assist device assists the travel of the host vehicle S.

For example, in the case where the vehicle travel assist device predicts that the two-wheeler B will go straight and where the host vehicle S is going to go straight or turn left, a safety measure can be taken, such as paying attention to the two-wheeler B as an target when the host vehicle goes straight or turns left at the target intersection K.

It is also possible to predict that the other vehicle A will turn right, at an earlier timing than when the other vehicle A performs direction indication.

Thus, the host vehicle S which is going to turn left does not have to stop once before the target intersection K and needs to pay attention only to the two-wheeler B after it turns left. Accordingly, the host vehicle S can travel smoothly.

In Fig. 6A, in the case of predicting the course of the other vehicle A based on the direction indication performed by the other vehicle A, the prediction timing is late, and the host vehicle S needs to slow down by then in some cases. In this case, for example, when the other vehicle A performs direction indication for turning right, the host vehicle S can stop slowing down and turn left at the target intersection K.

In Fig. 6B, the host vehicle S is traveling behind the other vehicle A toward the target intersection K. The course prediction section 15 of the host vehicle S predicts that the other vehicle A will turn right at the target intersection K because the other vehicle A is following the two-wheeler B.

Since the other vehicle A turns right, it is preferable to assist the travel of the host vehicle based on the course of the two-wheeler B after the other vehicle A turns right as in the case of Fig. 4A. Accordingly, in the embodiment, at the time when the vehicle travel assist device predicts that the other vehicle A will turn right since the other vehicle A is following the two-wheeler B, in short, at an early timing, the vehicle travel assist device predicts the course of the two-wheeler B. Then, based on the predicted course of the two-wheeler B, the vehicle travel assist device assists the host vehicle S in traveling.

For example, in the case where the vehicle travel assist device predicts that the two-wheeler B will go straight and where the host vehicle S is going to go straight or turn right, a safety measure can be taken, such as paying attention to the two-wheeler B as an target when the host vehicle goes straight or turns left at the target intersection K.

In addition, it is possible to predict that the other vehicle A will turn right, at an earlier timing than when the other vehicle A performs direction indication. Accordingly, for example, predicting that the other vehicle A will slow down when turning right, the host vehicle S can increase the following distance to the other vehicle A.

As has been described above, in the embodiment, the travel of the host vehicle is assisted based on the courses (which are referred to as the predicted courses) that are predicted to be taken by another vehicle that is traveling on a road toward an intersection (a target intersection) and a surrounding object (such as a two-wheeler) different from the other vehicle (S13). In the embodiment, the surrounding object traveling on the road toward the intersection is detected (S21). In the case where the other vehicle is following the surrounding object (YES at S25), the travel of the host vehicle is assisted based on the course (the predicted course) that is predicted to be taken by the surrounding object instead of the predicted course of the other vehicle (S13).

Accordingly, for the other vehicle, it is possible to predict the course of the other vehicle before it performs direction indication, in short, at an earlier timing. For the surrounding object, it is possible to predict the course of the surrounding object at the time when the other vehicle is following the surrounding object, in short, at an earlier timing. As a result, it is possible to predict the courses of the surrounding object and the other vehicle at earlier timings, and thus, it is possible to assist the travel of the host vehicle based on the predicted courses.

In the case where the other vehicle is not following the surrounding object (NO at S25), the vehicle travel assist device predicts that the other vehicle will not turn to the direction on the surrounding object side (to the surrounding object side) at the intersection (S35, S43, S45). Thus, it is possible to predict at an earlier timing that the other vehicle will not turn to the surrounding object side at the intersection, making possible to assist the travel of the host vehicle based on the predicted course.

In the case where the distance from the surrounding object to the target intersection is larger than a specified threshold (NO at S31) and the other vehicle overtook the surrounding object at a constant speed, in other words, in the case where the other vehicle overtook the surrounding object at a constant speed in a section having a length larger than the threshold (NO at S33), the vehicle travel assist device predicts that the other vehicle will not turn to the direction on the surrounding object side (to the surrounding object side) at the intersection (S43, S45). Thus, it is possible to predict that the other vehicle will not turn to the surrounding object side at the intersection, making possible to assist the travel of the host vehicle based on the predicted course.

In the case where the distance from the surrounding object to the target intersection is larger than the specified threshold (NO at S31) and the other vehicle overtook the surrounding object while accelerating, in other words, in the case where the other vehicle overtook the surrounding object while accelerating in a section having a length larger than the threshold (YES at S33), the vehicle travel assist device predicts that the other vehicle will turn to the direction on the surrounding object side (to the surrounding object side) at the intersection (S27). Thus, it is possible to predict that the other vehicle will turn to the surrounding object side at the intersection, making possible to assist the travel of the host vehicle based on the predicted course.

Note that in the present embodiment, the vehicle travel assist device is mounted on the host vehicle (S). However, the configuration may be such that a communicable server device is mounted on the host vehicle or a vehicle travel assist device is mounted on a vehicle which is not the host vehicle, necessary information and instructions are transmitted and received by the server device or by communication between the vehicle having the vehicle travel assist device and the host vehicle, and thus the same or a similar vehicle travel assist method is performed remotely. The communication between the server device and the host vehicle can be implemented by wireless communication or road-vehicle communication. The communication between the vehicle having the vehicle travel assist device and the host vehicle can be implemented by what is called inter-vehicle communication.

Although an embodiment of the present invention has been described above, it should not be understood that the descriptions and drawings consisting part of this disclosure limit this invention. From this disclosure, various alternative embodiments, examples, and operational techniques will be apparent to those skilled in the art.

Each function shown in each embodiment above can be implemented using one or more processing circuits. Examples of processing circuits include a programed processing device such as a processing device including an electrical circuit. Examples of a processing device include an application specific integrated circuit (ASIC) and a device such as a conventional circuit part that are arranged to execute functions described in the embodiment.

### REFERENCE SIGNS LIST

- 1: object detection device
- 2a: detection integration section
- 2b: object tracking section
- 3: host-vehicle-position estimation device
- 4: map acquisition device
- 5: in-map position calculation section
- 10: movement prediction section
- 11: behavior determination section
- 12: intersection determination section
- 13: two-wheeler detection section
- 14: other vehicle detection section
- 15: course prediction section
- 21: host-vehicle-route generation section
- 22: vehicle control section
- A: other vehicle
- B: two-wheeler (surrounding object)
- S: host vehicle
- v1, v2, v3: likelihood

## Claims

1. A vehicle travel assist method performed by a vehicle travel assist device that assists travel of a host vehicle based on predicted courses of another vehicle traveling on a road toward an intersection and a surrounding object different from the other vehicle, comprising:
detecting the surrounding object traveling on the road toward the intersection; and
in a case where the other vehicle is following the surrounding object, assisting the travel of the host vehicle based on the predicted course of the surrounding object instead of the predicted course of the other vehicle.

2. The vehicle travel assist method according to claim 1, wherein
in a case where the other vehicle is not following the surrounding object, the vehicle travel assist device predicts that the other vehicle will not turn, at the intersection, to a direction toward the surrounding object side from the center of the road in the width direction.

3. The vehicle travel assist method according to claim 1 or 2, wherein
in a case where the other vehicle overtook the surrounding object at a constant speed in a section having a length to the intersection that is larger than a specified threshold, the vehicle travel assist device predicts that the other vehicle will not turn, at the intersection, to a direction toward the surrounding object side from the center of the road in the width direction.

4. The vehicle travel assist method according to any one of claims 1 to 3, wherein
in a case where the other vehicle overtook the surrounding object while accelerating in a section having a length to the intersection that is larger than a specified threshold, the vehicle travel assist device predicts that the other vehicle will turn, at the intersection, to a direction toward the surrounding object side from the center of the road in the width direction.

5. A vehicle travel assist device that assists travel of a host vehicle based on predicted courses of another vehicle traveling on a road toward an intersection and a surrounding object different from the other vehicle, comprising:
a sensor that detects the surrounding object traveling on the road toward the intersection; and
a control circuit that, in a case where the other vehicle is following the surrounding object, assists the travel of the host vehicle based on the predicted course of the surrounding object instead of the predicted course of the other vehicle.
